# EUROPEAN PATENT SPECIFICATION

(11) **EP 2 846 576 B1**
(45) Date of publication and mention of the grant of the patent: **21.03.2018**
(21) Application number: 13780528.9
(22) Date of filing: 02.04.2013
(51) Int. Cl.: H04W 24/02

(54) **METHOD AND CONTROL NODE FOR MESSAGE PROCESSING BETWEEN WIRELESS ACCESS NETWORK NODES**
VERFAHREN UND KNOTEN ZUR NACHRICHTENVERARBEITUNG ZWISCHEN DRAHTLOSZUGANGSNETZWERKKNOTEN
PROCÉDÉ ET NOEUD DE COMMANDE POUR TRAITEMENT DE MESSAGES ENTRE NOEUDS D'UN RÉSEAU À ACCÈS SANS FIL

(30) Priority: 23.04.2012 CN 201210121422
(43) Date of publication of application: 11.03.2015
(73) Proprietor: ZTE Corporation, Shenzhen, Guangdong 518057 (CN)
(72) Inventor: LIU, Xin, Shenzhen, Guangdong 518057 (CN)
(74) Representative: Novagraaf Technologies
(86) International application number: PCT/CN2013/073660
(87) International publication number: WO 2013/159636

(56) References cited:
- EP-A1- 2 389 025
- WO-A1-2009/099224
- WO-A1-2010/066164
- CN-A- 101 594 674
- 3GPP: "3rd Generation Partnership Project; Technical Specification Group GSM/EDGE Radio Access Network; General Packet Radio Service (GPRS); Base Station System (BSS) - Serving GPRS Support Node (SGSN); BSS GPRS Protocol (BSSGP) (Release 10)", 3GPP DRAFT; 48018-A50, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 16 March 2012 (2012-03-16), XP050595126, [retrieved on 2012-03-16]

## Description

### Field

The present invention relates to the technical field of Long Term Evolution (LTE)-enhanced universal terrestrial radio access network, including, e.g., a method and controlling node for processing message between radio access network nodes.

### Background

48.018 protocol defines a RAN Information Management (RIM) flow, and a universal RIM flow is used for information interaction between Radio Access Network (RAN) nodes of a GSM EDGE Radio Access Network (GERAN), an Evolved Universal Terrestrial Radio Access Network (E-UTRAN) and a Universal Terrestrial Radio Access Network (U-TRAN) via core networks. The RAN node requesting for information is called a controlling node, the node providing the information is called a serving node, and the RAN nodes associated with RIM application can be the controlling node or the serving node of each other. The RAN nodes encapsulate the information in a RIM container, and the encapsulated information is transparently transmitted between the core networks. After related information about a target cell is acquired from the network through the RIM flow, User Equipment (UE) in an activated state in an original cell is instructed for inter-network cell change by a handover command or a Cell Change Order (CCO) to rapidly access the target cell, so that a service interruption time of the UE is reduced, and a performance of a packet data service is improved.

However, once the serving node is reset or the condition of an abnormity of a link between the controlling node and the serving node occurs, the controlling node in a conventional RIM protocol cannot sense it, so that system information stored on the controlling node is invalid and even wrong, which contrarily worsens a success rate and performance of inter-system handover or reorientation.
In 3GPP; Technical Specification Group GSM/EDGE Radio Access Network; GPRS; BSS-SGSN; BSSGP (Release 10)), and WO 2009/099224 A1 respective technical solutions are provided, however, the above mentioned problem still remains unsolved.

### Summary

The present invention provides a method and a controlling node for processing message between radio access network nodes, so as to solve the problem that the controlling node cannot sense an abnormity of a serving node when the serving node is abnormal.

According to one aspect of the present invention, a method for processing message between radio access network nodes is provided, comprising: sending, by a controlling node, a request message for multiple reporting system information to a serving node, wherein a report interval (period) is carried in the request message; receiving, by the controlling node, the system information reported by the serving node according to the request message, wherein the system information is reported when the system information of a system where the serving node is located changes or the report interval is reached; checking, by the controlling node, receiving sequence numbers of the system information reported multiple times according to the report interval, and judging whether the RIM flow of the controlling node is synchronous with a RIM flow of the serving node or not according to the receiving sequence numbers; and reinitiating, by the controlling node, a RIM flow when the RIM flow of the controlling node is synchronous with the RIM flow of the serving node.

The step of judging whether the RIM flow of the controlling node is synchronous with the RIM flow of the serving node according to the receiving sequence numbers comprises: when the controlling node determines that the receiving sequence numbers increase and fall in a receiving window, determining that the RIM flow of the controlling node is kept in synchronous with the RIM flow of the serving node; otherwise determining that the RIM flow of the controlling node is asynchronous with the RIM flow of the serving node.

The method further comprises: the controlling node updating the report interval, informing the serving node of stopping the RIM flow, and reinitiating a flow of sending a request message for multiple reporting the system information to the serving node, wherein an updated report interval is carried in the request message.

The step of the controlling node determining that the RIM flow of the controlling node is asynchronous with the RIM flow of the serving node comprises: when the controlling node determines that the receiving sequence numbers of the multiple received system information do not increase and the number of times of that the receiving sequence numbers do not increase reaches a preset maximum number of times, determining that the RIM flow of the controlling node is asynchronous with the RIM flow of the serving node.

The step of when the controlling node determines that the receiving sequence numbers of the multiple received system information do not increase, and the number of times of that the receiving sequence numbers do not increase reaches the preset maximum number of times, determining that the RIM flow of the controlling node is asynchronous with the RIM flow of the serving node comprises: when the receiving sequence number of the currently received system information does not increase, adding, by the controlling node, 1 to a value of an identification field or a counter representative of the number of times that the receiving sequence numbers do not increase; otherwise, the clearing the value of the identification field or the counter, and ending the flow; and when the value of the identification field or the counter reaches the preset maximum number of times, determining that the RIM of the controlling node is asynchronous with the RIM flow of the serving node, otherwise ending the flow.

The flow of when the controlling node updating the report interval, informing the serving node of stopping the RIM flow, and reinitiating the flow of sending the request message for multiple reporting the system information to the serving node comprises: receiving, by the controlling node, an instruction of updating the report interval, and obtaining the updated report interval according to the instruction; sending, by the controlling node, a stop request message to the serving node to enable the serving node to stop a system information reporting flow of the RIM flow according to the stop request message, and receiving a stop confirmation message returned by the serving node; and the controlling node, after receiving the stop confirmation message, and receiving the stop confirmation message, reinitiating, by the controlling node, the flow of sending the request message for multiple reporting the system information to the serving node, wherein the updated report interval is carried in the request message, so as to the serving node reports the system information of the system where the serving node is located according to the updated report interval.

According to the other aspect of the present invention, a controlling node is provided, comprising: a sending component, configured to send a request message for multiple reporting the system information to a serving node, wherein a report interval (period) is carried in the request message; a receiving component, configured to receive the system information reported by the serving node according to the request message, wherein the system information is reported when the system information of a system where the serving node is located changes or the report interval is reached; a judging component, configured to check receiving sequence numbers of the system information reported multiple times according to the report interval and judge whether the RIM flow of the controlling node is asynchronous with the RIM flow of the serving node according to the receiving sequence numbers; and a processing component, configured to reinitiate a RIM flow when the RIM flow of the controlling node is asynchronous with the RIM flow of the serving node.

The judging component is configured to determine that the RIM flow of the controlling node is kept in synchronous with the RIM flow of the serving node based on that the receiving sequence numbers increase and fall in a receiving window; otherwise determine that the RIM flow of the controlling node is asynchronous with the RIM flow of the serving node.

The controlling node further comprising: an updating component, configured to update the report interval, inform the serving node of stopping a system information reporting flow of the RIM flow when updating the report interval and reinitiate a flow of sending a request message for multiple reporting the system information to the serving node, wherein an updated report interval is carried in the request message.

The judging component, when it is determined that the RIM flow of the controlling node is asynchronous with the RIM flow of the serving node, is configured to determine that the RIM flow of the controlling node is asynchronous with the RIM flow of the serving node based on that the receiving sequence numbers of the multiple received system information do not increase and the number of times of that the receiving sequence numbers do not increase reaches a preset maximum number of times.

The updating component comprises: an obtaining element, configured to obtain the updated report interval according to a received instruction of updating the report interval; a sending sub-element, configured to send a stop request message to the serving node to enable the serving node to stop a system information reporting flow of the RIM flow according to the stop request message, and receive a stop confirmation message returned by the serving node; and a control sub-element, configured to, after receiving the stop confirmation message, re-control the sending component to initiate the flow of sending the request message for multiple reporting the system information to the serving node, wherein the updated report interval is carried in the request message, so as to the serving node reports the system information of the system where the serving node is located according to the updated report interval.

In the solution, the report interval is carried by the request message for the serving node reporting system information between the controlling node and the serving node. When the system information of the serving node changes or the report interval requested by the controlling node is reached, the serving node is required to report the system information to the controlling node. The controlling node determines that the serving node is abnormal based on not receiving the system information reported by the serving node for many times within a specified time interval (one or more report intervals). The controlling node reinitiates the RIM flow to ensure the validity of the acquired system information, and can sense the abnormality of the serving node when the serving node is abnormal; thus effectively reducing a failure rate of inter-system handover or reorientation caused by the system information inconsistency of different systems.

### Brief Description of the Drawings

Fig. 1 is a flowchart of a method for message processing between radio access network nodes according to an embodiment of the present invention;
Fig. 2 is a flowchart of starting requesting for the multiple report of system information by a controlling node and reporting the system information by a serving node according to an embodiment of the present invention;
Fig. 3 is a flowchart of checking whether a controlling node to be synchronous with a RIM flow of a serving node according to a report interval according to an embodiment of the present invention;
Fig. 4 is a flowchart of informing a serving node when a controlling node modifies a report interval according to an embodiment of the present invention; and
Fig. 5 is a structural diagram of a controlling node according to an embodiment of the present invention.

### Detailed Description of the Embodiments

In order to make clearer the technical problem to be solved by the present invention, the technical solution and advantages, detailed description will be given below with reference to the drawings and specific embodiments.

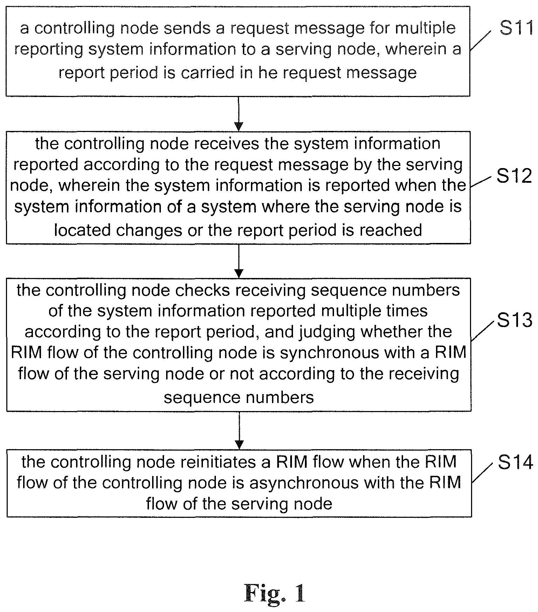

Fig. 1 is a flowchart of a method for processing message between radio access network nodes according to an embodiment of the present invention, and as shown in Fig. 1, the flow comprises the following steps:
S11, a controlling node sends a request message for multiple reporting system information to a serving node, wherein a report interval is carried in the request message;
S12, the controlling node receives the system information reported by the serving node according to the request message, wherein the system information is reported when the system information of a system where the serving node is located changes or the report interval is reached;
S13, the controlling node checks receiving sequence numbers of the system information reported multiple times according to the report interval, and judging whether the RIM flow of the controlling node is synchronous with a RIM flow of the serving node or not according to the receiving sequence numbers; wherein when the receiving sequence numbers increase and fall in a receiving window, it is determined that the RIM flow of the controlling node is kept in synchronous with the RIM flow of the serving node each other, otherwise it is determined that the RIM flow of the controlling node is asynchronous with the RIM flow of the serving node; and
S14, the controlling node reinitiates a RIM flow when the RIM flow of the controlling node is asynchronous with the RIM flow of the serving node,.

In the above-mentioned embodiment, the request message may be: a RAN-INFORMATION-REQUEST/Multiple Report message of the controlling node and the serving node. The report interval is carried by the RAN-INFORMATION-REQUEST/Multiple Report message of the controlling node and the serving node. When the system information of the serving node changes or the report interval requested by the controlling node is reached, the serving node is required to report the system information to the controlling node. The controlling node determines that the serving node is abnormal based on not receiving the system information reported by the serving node for many times within a specified time interval (one or more report intervals), and reinitiates the RIM flow to ensure the validity of the acquired system information. The controlling node can sense the abnormality of the serving node when the serving node is abnormal; thus effectively reducing a failure rate of inter-system handover or reorientation caused by the system information inconsistency of different systems.

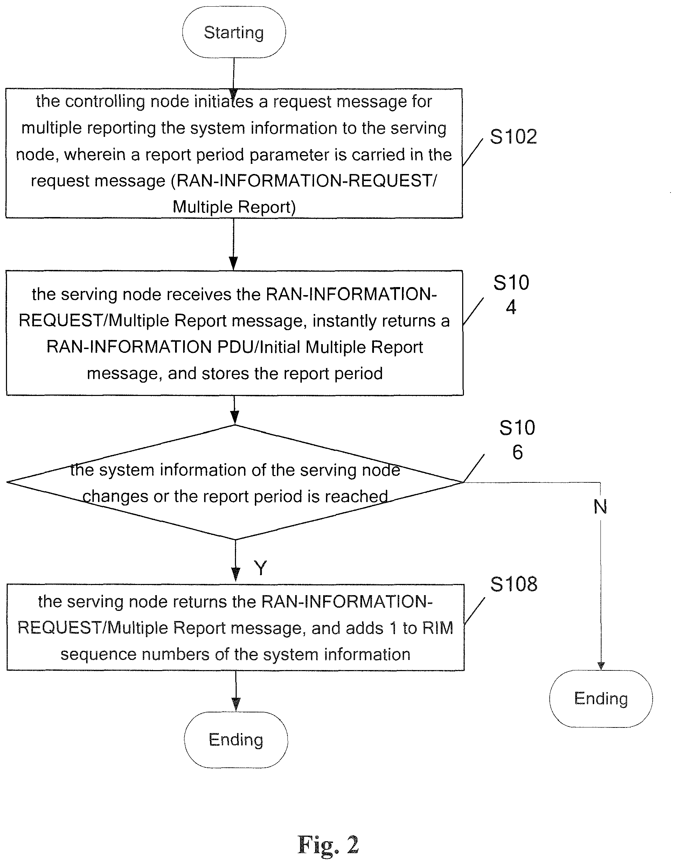

Fig. 2 is a flowchart of a controlling node starting requesting for multiple reporting system information and a serving node reporting the system information according to an embodiment of the present invention, and as shown in Fig. 2, the flow comprises the following steps:
S102, the controlling node initiates a request message for multiple reporting the system information to the serving node, wherein a newly added report interval is carried in the request message (RAN-INFORMATION-REQUEST/Multiple Report) ;
S104, the serving node, after receiving the RAN-INFORMATION-REQUEST/Multiple Report message, instantly returns a RAN-INFORMATION PDU/lnitial Multiple Report message, and if the request message carries the newly added report interval, stores the report interval, and starts a report interval timer;
S106, the serving node judges whether the system information changes or not, or whether the report interval timer expires or not, and if yes, turns to S108, otherwise the flow is ended; and
S108, the serving node returns the RAN-INFORMATION-REQUEST/Multiple Report message to the controlling node, and adds 1 to RIM sequence numbers in the message.

In the embodiment, by newly adding the report interval in the RAN-INFORMATION-REQUEST/Multiple Report message, the controlling node determines that is lose touch with the serving node or determines that the serving node is abnormal based on not receiving the system information fed back by the serving node within the report interval for multiple report, thereby reinitiating the RIM flow.

Structures of the messages involved above are shown in the following tables:

**Table 1: RAN-INFORMATITON-REQUEST PDU content**

| **Information elements** | **Type** / **Reference** | **Presence** | **Format** | **Length** |
|---|---|---|---|---|
| PDU type | PDU type/11.3.26 | M | V | I |
| Destination Cell Identifier | RIM Routing Information/11.3.70 | M | TLV | 3-? |
| Source Cell Identifier | RIM Routing Inrormation/11.3.70 | M | TLV | 3-? |
| RIM Container RIM | RAN-INFORMATION-REQUES T RIM Container/11.3.62a.1 | M | TLV | 3-? |

**Table 2: RAN-INFORMATION-REQUEST RIM Container Contents**

| **Information Elements** | **Type** / **Reference** | **Presenc e** | **Form at** | **Lengt h** |
|---|---|---|---|---|
| RIM Application Identity | RIM Application Identity/11.3.61 | M | TLV | 3 |
| RIM Sequence Number | RIM Sequence Number/11.3.62 | M | TLV | 6 |
| RIM PDU Indications | RIM PDU Indications/11.3.65 | M | TLV | 3 |
| RIM Protocol Version Number | RIM Protocol Version Number/11.3.67 | O | TLV | 3 |
| Application Container (note 1) | RAN-INFORMATION-REQ UEST Application Container/11.3.63.1 | C | TLV | 4-? |
| Report Interval | Report Interval | O | TLV | 5 |
| SON Transfer Application Identity (note 2) | SON Transfer Application Identity/11.3.108 | C | TLV | 3-m |
| NOTE 1: The presence of the Application Container depends of the value of the RIM Application Identity IE. | | | | |
| NOTE 2: The SON Transfer Application Identity IE shall be present if and only if the RIM Application Identity IE is set to "SON Transfer". | | | | |

**Table 3: Report Interval**

| | **8** | **7** | **6** | **5** | **4** | **3** | **2** | **1** |
|---|---|---|---|---|---|---|---|---|
| octet 1 | IEI | | | | | | | |
| octet 2, 2a | Length Indicator | | | | | | | |
| octet 3 | ENUMERATED { ms120, ms240, ms480, ms640, 1024 ms, ms2048, ms5120, ms10240,min1, min6, min12, min30, min60, spare3, spare2, spare1} | | | | | | | |

Wherein, the report interval in table 2 is the newly added report interval in the embodiment, its structure is as shown in the above table 3, and its value can be represented by 1 byte (namely the 8 binary bits in Table 3), and can correspondingly be 120 milliseconds (ms), 240ms, 480ms, 640ms, 1,024ms, 2,048ms, 5,120ms, 10,240ms, 1 minutes (min), 6min, 12min, 30min or 60min; and the report interval in table 1 certainly further includes reserved fields, spare 3, spare 2 and spare 1, as to show that the report interval can also be another value different from the values listed above.

Preferably, the step S13 can include the following processing: S131, the controlling node determines that the RIM flow of the controlling node is asynchronous with the RIM flow of the serving node when it is determined that the receiving sequence numbers do not increase and the number of times of that the receiving sequence numbers do not increase reaches a preset maximum number of times.

Preferably, the step S131 can include the following processing: if it is determined that the receiving sequence number of the currently received system information does not increase compared with that of the previously received system information, the controlling node adds 1 to a value of an identification field or a counter representative of the number of times that the receiving sequence numbers do not increase; otherwise, the controlling node clears the value of the identification field or the counter, and the flow is ended; and if the value of the identification field or the counter reaches the preset number of times, the controlling node determines that the RIM flow of the controlling node is asynchronous with the RIM flow of the serving node, otherwise the flow is ended.

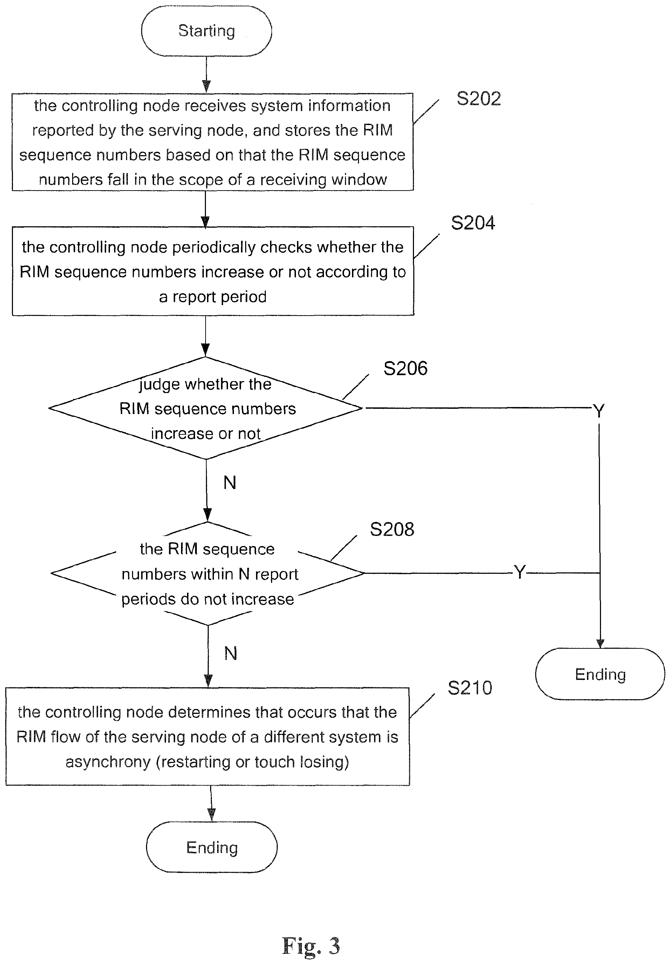

Fig. 3 is a flowchart of checking whether the RIM flow of the controlling node is asynchronous with a RIM flow of a serving node according to a report interval according to an embodiment of the present invention, and as shown in Fig. 3, the flow of the controlling node checking whether the RIM flow of the controlling node is asynchronous with the RIM flow of the serving node according to the report interval comprises:
S202, the controlling node receives system information reported by the serving node, and if the receiving sequence numbers (or RIM sequence numbers) of the reported system information fall in the scope of a receiving window, stores the receiving sequence numbers of the received system information;
S204, the controlling node intervalically checks whether the RIM sequence numbers of the system information received for many times increase or not according to the report interval;
S206, if it is determined that the RIM sequence numbers do not increase, the controlling node adds 1 to the number of times that the RIM sequence numbers do not increase (specifically represented by an identification field or a counter), and enters S208; otherwise, the controlling node clears a value of the identification field or the counter representative of no increase, and the flow is ended;
S208, the controlling node judges whether the value of the identification field representative of no increase reaches a maximum number of times (N), and if the value of the identification field reached the maximum number of times, enters S210, otherwise, the flow is ended; and
S210, the controlling node determines that the RIM flow is asynchrony (restarting or touch losing) with the serving node of a different system.

Preferably, after S11-S14, the method can further comprises:
S15, the controlling node, when updating the report interval, informs the serving node of stopping the RIM flow, and reinitiates a flow of sending a request message for multiple reporting the system information to the serving node, wherein an updated report interval is carried in the request message.

Wherein, S15 can preferably comprises: S151, the controlling node receives an instruction of updating the report interval, and obtains the updated report interval according to the instruction; S152, the controlling node sends a stop request message to the serving node to enable the serving node to stop a system information reporting flow of the RIM flow according to the stop request message, and receives a stop confirmation message returned by the serving node; and S153, the controlling node, after receiving the stop confirmation message, reinitiates the flow of transmitting the request message for multiple reporting the system information to the serving node, wherein the updated report interval is carried in the request message, so as to the serving node reports the system information of the system where the serving node is located according to the updated report interval.

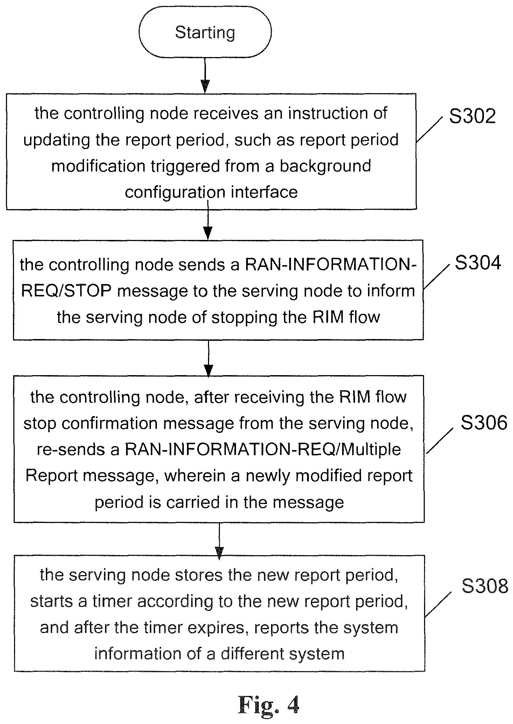

Fig. 4 is a flowchart of a controlling node informing of a serving node when a controlling node modifies a report interval according to an embodiment of the present invention, and as shown in Fig. 4, the flow of a controlling node informing of the serving node when the controlling node modifies the report interval comprises the following steps:
S302, the controlling node receives an instruction of updating the report interval, such as report interval modification triggered from a background configuration interface;
S304, the controlling node sends a RAN-INFORMATION-REQ/STOP message to the serving node to inform the serving node of stopping a system information reporting flow of the RIM flow, and the serving node, after receiving the stop message, instantly stops the inter-system information reporting flow of the RIM flow, and returns a stop confirmation message;
S306, the controlling node, after receiving the RIM flow stop confirmation message from the serving node, re-sends a RAN-INFORMATION-REQ/Multiple Report message, wherein a newly modified report interval is carried in the message; and
S308, the serving node stores the new report interval, starts a timer according to the report interval, and after the timer expires, reports the system information of a different system.

In the above-mentioned embodiment, the problem that the controlling node cannot sense an abnormity of the serving node when the serving node is abnormal (a scenario such as restarting and an abnormity of a communication link with the controlling node) can be solved; thus effectively reducing a failure rate of inter-system handover or reorientation caused by the system information inconsistency of different systems.

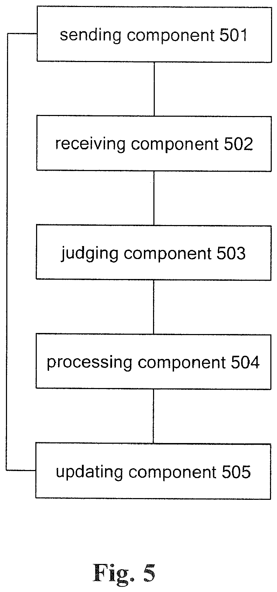

Fig. 5 is a structural diagram of a controlling node according to an embodiment of the present invention, and as shown in Fig. 5, the embodiment also provides a node, which is the controlling node according to the above-mentioned embodiments, the controlling node comprises:
a sending component 501, is configured to send a request message for multiple reporting system information to a serving node, wherein a report interval is carried in the request message;
a receiving component 502, is configured to receive the system information reported by the serving node according to the request message, wherein the system information is reported when the system information of a system where the serving node is located changes or the report interval is reached;
a judging component 503, is configured to check receiving sequence numbers of the system information reported multiple times according to the report interval and judge whether the RIM flow of the controlling node is synchronous with a RIM flow of the serving node or not according to the receiving sequence numbers; preferably, it is determined that the RIM flow of the controlling node is kept synchronous with the RIM flow of the serving node based on the receiving sequence numbers increase and fall in a receiving window, otherwise it is determined that the RIM flow of the controlling node is asynchronous with the RIM flow of the serving node; and
a processing component 504, is configured to, when the RIM flow of the controlling node is asynchronous with the RIM flow of the serving node, reinitiate a RIM flow.

Preferably, the controlling node can further comprises: an updating component 505, is configured to update the report interval, inform the serving node of stopping the RIM flow when updating the report interval and reinitiate a flow of sending a request message for multiple reporting the system information to the serving node, wherein an updated report interval is carried in the request message.

Preferably, the judging component, is configured to determine that the RIM flow of the controlling node is asynchronous with the RIM flow of the serving node based on that it is determined that the receiving sequence numbers of multiple times received system information does not increase and the number of times of that the receiving sequence numbers do not increase reaches a preset maximum number of times.

Preferably, the updating component comprises: an obtaining element, is configured to obtain the updated report interval according to a received instruction of updating the report interval; a send sub-element, is configured to send a stop request message to the serving node to enable the serving node to stop a system information reporting flow of the RIM flow according to the stop request message and receive a stop confirmation message returned by the serving node; and a control sub-element, is configured to, after receiving the stop confirmation message, re-control the sending component to initiate the flow of sending the request message for multiple reporting the system information to the serving node, wherein the updated report interval is carried in the request message, so as to the serving node reports the system information of the system where the serving node is located according to the updated report interval.

The controlling node carries the report interval in the request message (RAN-INFORMATION-REQUEST/Multiple Report) for the system information reported by the serving node between the controlling node and the serving node. When the system information of the serving node changes or the report interval requested by the controlling node is reached, the serving node is required to report the system information to the controlling node. The controlling node determines that the serving node is abnormal based on not receiving the system information reported by the serving node for many times within a specified time interval (one or more report intervals), reinitiates the RIM flow to ensure the validity of the acquired system information, and can sense an abnormality of the serving node when the serving node is abnormal; thus effectively reducing a failure rate of inter-system handover or reorientation caused by the system information inconsistency of different systems.

## Claims

1. A method for processing message between radio access network nodes, comprising:
sending, by a controlling node, a request message for multiple reporting system information to a serving node, wherein a report period is carried in the request message (S11);
receiving, by the controlling node, the system information reported by the serving node according to the request message, wherein the system information is reported when the system information of a system where the serving node is located changes or the report period is reached (S12);
checking, by the controlling node, receiving sequence numbers of the system information reported multiple times according to the report period, and judging whether a RAN information management, RIM, flow of the controlling node is synchronous with a RIM flow of the serving node or not according to the receiving sequence numbers (S13), wherein judging whether the RIM flow of the controlling node is synchronous with the RIM flow of the serving node or not according to the receiving sequence numbers comprises: when the controlling node determines that the receiving sequence numbers increase and fall in a receiving window, determining that the RIM flow of the controlling node is kept in synchronous with the RIM flow of the serving node, otherwise determining that the RIM flow of the controlling node is asynchronous with the RIM flow of the serving node; and
reinitiating, by the controlling node, a RIM flow when the RIM flow of the controlling node is asynchronous with the RIM flow of the serving node (S14).

2. The method for processing message between the radio access network nodes according to claim 1, **characterized by**, further comprising:
when the controlling node updating the report period informing the serving node of stopping the RIM flow, and reinitiating a flow of sending a request message for multiple reporting the system information to the serving node, wherein an updated report period is carried in the request message.

3. The method for processing message between the radio access network nodes according to claim 1 or 2, **characterized in that**, the step of determining the RIM flow of the controlling node is asynchronous with the RIM flow of the serving node comprises:
when the controlling node determines that the receiving sequence numbers of the multiple received system information do not increase and the number of times of that the receiving sequence numbers do not increase reaches a preset maximum number of times, determining that the RIM flow of the controlling node is asynchronous with the RIM flow of the serving node.

4. The method for processing message between the radio access network nodes according to claim 3, **characterized in that**, the step of, when the controlling node determines that the receiving sequence numbers of the multiple received system information do not increase and the number of times of that the receiving sequence numbers do not increase reaches a preset maximum number of times, determining that the RIM flow of the controlling node is asynchronous with the RIM flow of the serving node comprises:
when the receiving sequence number of the currently received system information is determined not to increase, adding, by the controlling node, 1 to a value of an identification field or a counter representative of the number of times that the receiving sequence numbers do not increase; otherwise clearing the value of the identification field or the counter, and ending the flow; and
when the value of the identification field or the counter reaches the preset maximum number of times, determining that the RIM flow of the controlling node is asynchronous with the RIM flow of the serving node, otherwise ending the flow.

5. The method for processing message between the radio access network nodes according to claim 2, **characterized in that**, the flow of, when the controlling node updating the report period, informing the serving node of stopping the RIM flow, and reinitiating a flow of sending a request message for multiple reporting the system information to the serving node comprises:
receiving, by the controlling node, an instruction of updating the report period, and obtaining the updated report period according to the instruction;
sending, by the controlling node, a stop request message to the serving node to enable the serving node to stop a system information reporting flow of the RIM flow according to the stop request message, and receiving a stop confirmation message returned by the serving node; and
after receiving the stop confirmation message, reinitiating, by the controlling node, the flow of sending the request message for multiple reporting the system information to the serving node, wherein the updated report period is carried in the request message, so as to the serving node reports the system information of the system where the serving node is located according to the updated report period.

6. A controlling node, comprising:
a sending component (501), configured to send a request message for multiple reporting system information to a serving node, wherein a report period is carried in the request message;
a receiving component (502), configured to receive the system information reported by the serving node according to the request message, wherein the system information is reported when the system information of a system where the serving node is located changes or the report period is reached;
a judging component (503), configured to check receiving sequence numbers of the system information reported multiple times according to the report period and judge whether a RAN information management, RIM, flow of the controlling node is synchronous with a RIM flow of the serving node or not according to the receiving sequence numbers, wherein the judging component is configured to determine that the RIM flow of the controlling node is kept in synchronous with the RIM flow of the serving node based on the receiving sequence numbers increase and fall in a receiving window, otherwise determine that the RIM flow of the controlling node is asynchronous with the RIM flow of the serving node; and
a processing component (504), configured to reinitiate a RIM flow when the RIM flow of the controlling node is asynchronous with the RIM flow of the serving node.

7. The controlling node according to claim 6, **characterized by**, further comprising:
an updating component (505), configured to update the report period, inform the serving node of stopping a system information reporting flow of the RIM flow when updating the report period, and reinitiate a flow of sending a request message for the multiple reporting the system information to the serving node, wherein an updated report period is carried in the request message.

8. The controlling node according to claim 6, **characterized in that**, the judging component (503), when it is determined that the RIM flow of the controlling node is asynchronous with the RIM flow of the serving node, is configured to determine that the RIM flow of the controlling node is asynchronous with the RIM flow of the serving node based on that the receiving sequence numbers of the multiple received system information do not increase and the number of times of that the receiving sequence numbers do not increase reaches a preset maximum number of times.

9. The controlling node according to claim 7, **characterized in that**, the updating component comprises:
an obtaining element, configured to obtain the updated report period according to a received instruction of updating the report period;
a sending sub-element, configured to send a stop request message to the serving node to enable the serving node to stop a system information reporting flow of the RIM flow according to the stop request message, and receive a stop confirmation message returned by the serving node; and
a control sub-element, configured to, after receiving the stop confirmation message, re-control the sending component to initiate the flow of sending the request message for multiple reporting the system information to the serving node, wherein the updated report period is carried in the request message, so as to the serving node reports the system information of the system where the serving node is located according to the updated report period.

## Patentansprüche

1. Verfahren zum Verarbeiten einer Nachricht zwischen Funkzugangsnetzwerkknoten, umfassend:
Senden, durch einen Steuerknoten, einer Anforderungsnachricht bezüglich mehrfachen Berichtens von Systeminformationen an einen Serving-Knoten, wobei ein Berichtszeitraum in der Anforderungsnachricht getragen wird (S11);
Empfangen, durch den Steuerknoten, der vom Serving-Knoten gemäß der Anforderungsnachricht berichteten Systeminformationen, wobei die Systeminformationen berichtet werden, wenn sich die Systeminformationen eines Systems, an dem der Serving-Knoten angesiedelt ist, ändern oder der Berichtszeitraum erreicht wird (S12);
Prüfen, durch den Steuerknoten, von Empfangsfolgenummern der gemäß dem Berichtszeitraum mehrere Male berichteten Systeminformationen und Beurteilen, ob ein RAN-Informationsmanagement-, RIM, Fluss des Steuerknotens gemäß den Empfangsfolgenummern zu einem RIM-Fluss des Serving-Knotens synchron ist oder nicht (S13), wobei das Beurteilen, ob der RIM-Fluss des Steuerknotens gemäß den Empfangsfolgenummern zum RIM-Fluss des Serving-Knotens synchron ist oder nicht umfasst: wenn der Steuerknoten bestimmt, dass die Empfangsfolgenummern in einem Empfangsfenster ansteigen und zurückgehen, Bestimmen, dass der RIM-Fluss des Steuerknotens zum RIM-Fluss des Serving-Knotens im Synchronen gehalten wird, andernfalls Bestimmen, dass der RIM-Fluss des Steuerknotens zum RIM-Fluss des Serving-Knotens asynchron ist; und
Neubeginnen, durch den Steuerknoten, eines RIM-Flusses, wenn der RIM-Fluss des Steuerknotens zum RIM-Fluss des Serving-Knotens asynchron ist (S14).

2. Verfahren zum Verarbeiten einer Nachricht zwischen den Funkzugangsnetzwerkknoten gemäß Anspruch 1, **dadurch gekennzeichnet, dass** es weiter umfasst:
wenn der Steuerknoten den Berichtszeitraum aktualisiert, Informieren des Serving-Knotens darüber, den RIM-Fluss zu stoppen, und Neubeginnen eines Flusses des Sendens einer Anforderungsnachricht bezüglich mehrfachen Berichtens der Systeminformationen an den Serving-Knoten, wobei ein aktualisierter Berichtszeitraum in der Anforderungsnachricht getragen wird.

3. Verfahren zum Verarbeiten einer Nachricht zwischen den Funkzugangsnetzwerkknoten gemäß Anspruch 1 oder 2, **dadurch gekennzeichnet, dass** der Schritt des Bestimmens, dass der RIM-Fluss des Steuerknotens zum RIM-Fluss des Serving-Knotens asynchron ist, umfasst:
wenn der Steuerknoten bestimmt, dass die Empfangsfolgenummern der mehrfach empfangenen Systeminformationen nicht ansteigen und die Zahl der Male dessen, dass die Empfangsfolgenummern nicht ansteigen, eine voreingestellte maximale Zahl von Malen erreicht, Bestimmen, dass der RIM-Fluss des Steuerknotens zum RIM-Fluss des Serving-Knotens asynchron ist.

4. Verfahren zum Verarbeiten einer Nachricht zwischen den Funkzugangsnetzwerkknoten gemäß Anspruch 3, **dadurch gekennzeichnet, dass** der Schritt des Bestimmens, dass der RIM-Fluss des Steuerknotens zum RIM-Fluss des Serving-Knotens asynchron ist, wenn der Steuerknoten bestimmt, dass die Empfangsfolgenummern der mehrfach empfangenen Systeminformationen nicht ansteigen und die Zahl der Male dessen, dass die Empfangsfolgenummern nicht ansteigen, eine voreingestellte maximale Zahl von Malen erreicht, umfasst:
wenn bestimmt wird, dass die Empfangsfolgenummer der aktuell empfangenen Systeminformationen nicht ansteigt, Addieren, durch den Steuerknoten, von 1 zu einem Wert eines Identifikationsfeldes oder eines Zählers, der für die Zahl von Malen, dass die Empfangsfolgenummern nicht ansteigen, repräsentativ ist; andernfalls Löschen des Wertes des Identifikationsfeldes oder des Zählers und Beenden des Flusses; und
wenn der Wert des Identifikationsfeldes oder der Zähler die voreingestellte maximale Zahl von Malen erreicht, Bestimmen, dass der RIM-Fluss des Steuerknotens zum RIM-Fluss des Serving-Knotens asynchron ist, andernfalls Beenden des Flusses.

5. Verfahren zum Verarbeiten einer Nachricht zwischen den Funkzugangsnetzwerkknoten gemäß Anspruch 2, **dadurch gekennzeichnet, dass** wenn der Steuerknoten den Berichtszeitraum aktualisiert, der Fluss des Informierens des Serving-Knotens darüber, den RIM-Fluss zu stoppen, und Neubeginnens eines Flusses des Sendens einer Anforderungsnachricht bezüglich mehrfachen Berichtens der Systeminformationen an den Serving-Knoten umfasst:
Empfangen, durch den Steuerknoten, einer Anweisung zum Aktualisieren des Berichtszeitraums, und Erhalten des aktualisierten Berichtszeitraums gemäß der Anweisung;
Senden, durch den Steuerknoten, einer Stopp-Anforderungsnachricht an den Serving-Knoten, um dem Serving-Knoten zu ermöglichen, einen Systeminformationen-Berichtsfluss des RIM-Flusses gemäß der Stopp-Anforderungsnachricht zu stoppen, und Empfangen einer vom Serving-Knoten zurückgegebenen Stopp-Bestätigungsnachricht; und
nach Empfangen der Stopp-Bestätigungsnachricht, Neubeginnen, durch den Steuerknoten, des Flusses des Sendens der Anforderungsnachricht bezüglich mehrfachen Berichtens der Systeminformationen an den Serving-Knoten, wobei der aktualisierte Berichtszeitraum in der Anforderungsnachricht getragen wird, sodass der Serving-Knoten die Systeminformationen des Systems, an dem der Serving-Knoten angesiedelt ist, gemäß dem aktualisierten Berichtszeitraum berichtet.

6. Steuerknoten, umfassend:
eine Sendekomponente (501), die dazu konfiguriert ist, eine Anforderungsnachricht bezüglich mehrfachen Berichtens von Systeminformationen an einen Serving-Knoten zu senden, wobei ein Berichtszeitraum in der Anforderungsnachricht getragen wird;
eine Empfangskomponente (502), die dazu konfiguriert ist, die vom Serving-Knoten gemäß der Anforderungsnachricht berichteten Systeminformationen zu empfangen, wobei die Systeminformationen berichtet werden, wenn sich die Systeminformationen eines Systems, an dem der Serving-Knoten angesiedelt ist, ändern oder der Berichtszeitraum erreicht wird;
eine Beurteilungskomponente (503), die dazu konfiguriert ist, Empfangsfolgenummern der gemäß dem Berichtszeitraum mehrere Male berichteten Systeminformationen zu prüfen und zu beurteilen, ob ein RAN-Informationsmanagement-, RIM, Fluss des Steuerknotens gemäß den Empfangsfolgenummern zu einem RIM-Fluss des Serving-Knotens synchron ist oder nicht, wobei die Beurteilungskomponente dazu konfiguriert ist, basierend auf dem Ansteigen und Zurückgehen der Empfangsfolgenummern in einem Empfangsfenster zu bestimmen, dass der RIM-Fluss des Steuerknotens zum RIM-Fluss des Serving-Knotens im Synchronen gehalten wird, andernfalls zu bestimmen, dass der RIM-Fluss des Steuerknotens zum RIM-Fluss des Serving-Knotens asynchron ist; und
eine Verarbeitungskomponente (504), die dazu konfiguriert ist, einen RIM-Fluss neu zu beginnen, wenn der RIM-Fluss des Steuerknotens zum RIM-Fluss des Serving-Knotens asynchron ist.

7. Steuerknoten gemäß Anspruch 6, **dadurch gekennzeichnet, dass** er weiter umfasst:
eine Aktualisierungskomponente (505), die dazu konfiguriert ist, den Berichtszeitraum zu aktualisieren, den Serving-Knoten darüber zu informieren, einen Systeminformationen-Berichtsfluss des RIM-Flusses zu stoppen, wenn der Berichtszeitraum aktualisiert wird, und einen Fluss des Sendens einer Anforderungsnachricht bezüglich des mehrfachen Berichtens der Systeminformationen an den Serving-Knoten neu zu beginnen, wobei ein aktualisierter Berichtszeitraum in der Anforderungsnachricht getragen wird.

8. Steuerknoten gemäß Anspruch 6, **dadurch gekennzeichnet, dass** die Beurteilungskomponente (503) dazu konfiguriert ist, wenn bestimmt wird, dass der RIM-Fluss des Steuerknotens zum RIM-Fluss des Serving-Knotens asynchron ist, darauf basierend, dass die Empfangsfolgenummern der mehrfach empfangenen Systeminformationen nicht ansteigen und die Zahl der Male dessen, dass die Empfangsfolgenummern nicht ansteigen, eine voreingestellte maximale Zahl von Malen erreicht, zu bestimmen, dass der RIM-Fluss des Steuerknotens zum RIM-Fluss des Serving-Knotens asynchron ist.

9. Steuerknoten gemäß Anspruch 7, **dadurch gekennzeichnet, dass** die Aktualisierungskomponente umfasst:
ein Erhaltenselement, das dazu konfiguriert ist, den aktualisierten Berichtszeitraum gemäß einer empfangenen Anweisung zum Aktualisieren des Berichtszeitraums zu erhalten;
ein Sende-Unterelement, das dazu konfiguriert ist, eine Stopp-Anforderungsnachricht an den Serving-Knoten zu senden, um dem Serving-Knoten zu ermöglichen, einen Systeminformationen-Berichtsfluss des RIM-Flusses gemäß der Stopp-Anforderungsnachricht zu stoppen, und eine vom Serving-Knoten zurückgegebene Stopp-Bestätigungsnachricht zu empfangen; und
ein Steuer-Unterelement, das dazu konfiguriert ist, nach Empfangen der Stopp-Bestätigungsnachricht die Sendekomponente erneut dazu zu steuern, den Fluss des Sendens der Anforderungsnachricht bezüglich mehrfachen Berichtens der Systeminformationen an den Serving-Knoten zu beginnen, wobei der aktualisierte Berichtszeitraum in der Anforderungsnachricht getragen wird, sodass der Serving-Knoten die Systeminformationen des Systems, an dem der Serving-Knoten angesiedelt ist, gemäß dem aktualisierten Berichtszeitraum berichtet.

## Revendications

1. Procédé de traitement de messages entre des noeuds de réseau d'accès radio, comprenant :
l'envoi, par un noeud de commande, d'un message de demande de multiples informations systèmes de signalement à un noeud de desserte, dans lequel une période de signalement est acheminée dans le message de demande (S11) ;
la réception, par le noeud de commande, des informations systèmes signalées par le noeud de desserte selon le message de demande, dans lequel les informations systèmes sont signalées lorsque les informations systèmes d'un système où le noeud de desserte est situé changent ou que la période de signalement est atteinte (S12) ;
la vérification, par le noeud de commande, de nombres de séquences de réception des informations systèmes signalées à de multiples occurrences selon la période de signalement, et le fait d'estimer si un flux de gestion d'informations RAN, RIM, du noeud de commande est synchrone ou non avec un flux RIM du noeud de desserte selon les nombres de séquences de réception (S13), dans lequel le fait d'estimer si le flux RIM du noeud de commande est synchrone ou non avec le flux RIM du noeud de desserte selon les nombres de séquences de réception comprend : lorsque le noeud de commande détermine que les nombres de séquences de réception augmentent et baissent dans une fenêtre de réception, la détermination que le flux RIM du noeud de commande est maintenu synchrone avec le flux RIM du noeud de desserte, sinon la détermination que le flux RIM du noeud de commande est asynchrone avec le flux RIM du noeud de desserte ; et
le lancement à nouveau, par le noeud de commande, d'un flux RIM lorsque le flux RIM du noeud de commande est asynchrone avec le flux RIM du noeud de desserte (S14).

2. Procédé de traitement de messages entre les noeuds de réseau d'accès radio selon la revendication 1, **caractérisé en ce qu'**il comprend en outre :
lorsque le noeud de commande met à jour la période de signalement, le fait d'informer le noeud de desserte d'arrêter le flux RIM, et le lancement à nouveau d'un flux d'envoi d'un message de demande de multiples informations systèmes de signalement au noeud de desserte, dans lequel une période de signalement mise à jour est acheminée dans le message de demande.

3. Procédé de traitement de messages entre les noeuds de réseau d'accès radio selon la revendication 1 ou 2, **caractérisé en ce que** l'étape de détermination que le flux RIM du noeud de commande est asynchrone avec le flux RIM du noeud de desserte comprend :
lorsque le noeud de commande détermine que les nombres de séquences de réception des multiples informations systèmes reçues n'augmentent pas et que le nombre d'occurrences où les nombres de séquences de réception n'augmentent pas atteint un nombre d'occurrences maximal préétabli, la détermination que le flux RIM du noeud de commande est asynchrone avec le flux RIM du noeud de desserte.

4. Procédé de traitement de messages entre les noeuds de réseau d'accès radio selon la revendication 3, **caractérisé en ce que** l'étape, lorsque le noeud de commande détermine que les nombres de séquences de réception des multiples informations systèmes reçues n'augmentent pas et que le nombre d'occurrences où les nombres de séquences de réception n'augmentent pas atteint un nombre d'occurrences maximal préétabli, de détermination que le flux RIM du noeud de commande est asynchrone avec le flux RIM du noeud de desserte comprend :
lorsque le nombre de séquences de réception des informations systèmes actuellement reçues est déterminé comme n'augmentant pas, l'ajout, par le noeud de commande, de 1 à une valeur d'un champ d'identification ou d'un compteur représentatif du nombre d'occurrences où les nombres de séquences de réception n'augmentent pas ; sinon l'annulation de la valeur du champ d'identification ou du compteur, et la fin du flux ; et
lorsque la valeur du champ d'identification ou du compteur atteint le nombre d'occurrences maximal préétabli, la détermination que le flux RIM du noeud de commande est asynchrone avec le flux RIM du noeud de desserte, sinon la fin du flux.

5. Procédé de traitement de messages entre les noeuds de réseau d'accès radio selon la revendication 2, **caractérisé en ce que** le flux, lorsque le noeud de commande met à jour la période de signalement, informant le noeud de desserte d'arrêter le flux RIM, et le lancement à nouveau d'un flux d'envoi d'un message de demande de multiples informations systèmes de signalement au noeud de desserte comprennent :
la réception, par le noeud de commande, d'une instruction de mise à jour de la période de signalement, et l'obtention de la période de signalement mise à jour selon l'instruction ;
l'envoi, par le noeud de commande, d'un message de demande d'arrêt au noeud de desserte pour permettre au noeud de desserte d'arrêter un flux de signalement d'informations systèmes du flux RIM selon le message de demande d'arrêt, et la réception d'un message de confirmation d'arrêt renvoyé par le noeud de desserte ; et
après réception du message de confirmation d'arrêt, le lancement à nouveau, par le noeud de commande, du flux d'envoi du message de demande de multiples informations systèmes de signalement au noeud de desserte, dans lequel la période de signalement mise à jour est acheminée dans le message de demande, de façon à ce que le noeud de desserte signale les informations systèmes du système où le noeud de desserte est situé selon la période de signalement mise à jour.

6. Noeud de commande, comprenant :
un composant d'envoi (501), configuré pour envoyer un message de demande de multiples informations systèmes de signalement à un noeud de desserte, dans lequel une période de signalement est acheminée dans le message de demande ;
un composant de réception (502), configuré pour recevoir les informations systèmes signalées par le noeud de desserte selon le message de demande, dans lequel les informations systèmes sont signalées lorsque les informations systèmes d'un système où le noeud de desserte est situé changent ou que la période de signalement est atteinte ;
un composant d'estimation (503), configuré pour vérifier des nombres de séquences de réception des informations systèmes signalées à de multiples occurrences selon la période de signalement, et évaluer si un flux de gestion d'informations RAN, RIM, du noeud de commande est synchrone ou non avec un flux RIM du noeud de desserte selon les nombres de séquences de réception, dans lequel le composant d'estimation est configuré pour déterminer que le flux RIM du noeud de commande est maintenu synchrone avec le flux RIM du noeud de desserte d'après le fait que les nombres de séquences de réception augmentent et baissent dans une fenêtre de réception, sinon pour déterminer que le flux RIM du noeud de commande est asynchrone avec le flux RIM du noeud de desserte ; et
un composant de traitement (504), configuré pour lancer à nouveau un flux RIM lorsque le flux RIM du noeud de commande est asynchrone avec le flux RIM du noeud de desserte.

7. Noeud de commande selon la revendication 6, **caractérisé en ce qu'**il comprend en outre :
un composant de mise à jour (505), configuré pour mettre à jour la période de signalement, informer le noeud de desserte d'arrêter un flux de signalement d'informations systèmes du flux RIM lors de la mise à jour de la période de signalement, et lancer à nouveau un flux d'envoi d'un message de demande de multiples informations systèmes de signalement au noeud de desserte, dans lequel une période de signalement mise à jour est acheminée dans le message de demande.

8. Noeud de commande selon la revendication 6, **caractérisé en ce que** le composant d'estimation (503), lorsqu'on détermine que le flux RIM du noeud de commande est asynchrone avec le flux RIM du noeud de desserte, est configuré pour déterminer que le flux RIM du noeud de commande est asynchrone avec le flux RIM du noeud de desserte d'après le fait que les nombres de séquences de réception des multiples informations systèmes reçues n'augmentent pas et que le nombre d'occurrences où les nombres de séquences de réception n'augmentent pas atteint un nombre d'occurrences maximal préétabli.

9. Noeud de commande selon la revendication 7, **caractérisé en ce que** le composant de mise à jour comprend :
un élément d'obtention, configuré pour obtenir la période de signalement mise à jour selon une instruction reçue de mise à jour de la période de signalement ;
un sous-élément d'envoi, configuré pour envoyer un message de demande d'arrêt au noeud de desserte pour permettre au noeud de desserte d'arrêter un flux de signalement d'informations systèmes du flux RIM selon le message de demande d'arrêt, et recevoir un message de confirmation d'arrêt renvoyé par le noeud de desserte ; et
un sous-élément de commande, configuré, après réception du message de confirmation d'arrêt, pour commander à nouveau au composant d'envoi de lancer le flux d'envoi du message de demande de multiples informations systèmes de signalement au noeud de desserte, dans lequel la période de signalement mise à jour est acheminée dans le message de demande, de sorte que le noeud de desserte signale les informations systèmes du système où le noeud de desserte est situé selon la période de signalement mise à jour.
